# EUROPEAN PATENT SPECIFICATION

(11) **EP 0 807 551 B1**
(45) Date of publication and mention of the grant of the patent: **06.03.2002**
(21) Application number: 97302989.5
(22) Date of filing: 01.05.1997
(51) Int. Cl.: B60R 1/06

(54) **Exterior mirror for a vehicle**
Aussenspiegel für Kraftfahrzeuge
Rétroviseur extérieur pour véhicule

(30) Priority: 16.05.1996 GB 9610256
(43) Date of publication of application: 19.11.1997
(73) Proprietor: BRITAX (GECO) S.A., F-77981 St. Fargeau-Ponthierry Cédex (FR)
(72) Inventor: Charlet, Francis, 77 140 Montcourt-Fromonville (FR)
(74) Representative: Price, Nigel John King

(56) References cited:
- EP-A- 0 519 115
- US-A- 5 005 797

## Description

This invention relates to an exterior mirror for a motor vehicle comprising a base having a mounting portion adapted to abut against a vehicle body and a support platform projecting laterally from the mounting portion, a spigot upstanding on the support platform, a mirror subassembly pivotally mounted on the spigot for angular movement about the axis thereof, a first detent formation secured to the base, a second detent formation secured to the mirror subassembly to engage with the first detent formation to resist angular movement about said axis, and a spring acting parallel to said axis to bias said first and second detent formations into engagement with each other.

US-A-5005797 discloses an exterior mirror of this type. The present invention aims to provide an exterior mirror of this type in which assembly is facilitated.

According to the invention, in one aspect, a method of assembling an exterior mirror of the type described above, comprises the steps of:
assembling the spigot and the spring into a sleeve so that the spring engages between a first projection on the exterior of the spigot and a second projection on the interior of the sleeve,
engaging a first abutment on the spigot with a complementary abutment on the sleeve so as to retain the spring in a stressed state,
engaging a bayonet connection between the spigot and the platform, and
disengaging the first abutment on the spigot from the complementary abutment on the sleeve so that the spring retains said bayonet connection in an engaged condition.

The first abutment may initially be connected to the spigot by a frangible link, the step of disengaging said first abutment from the complementary abutment being effected by breaking said link.

According to the invention, in another aspect, an exterior mirror of the type described above has a first projection on the exterior of the spigot engaging with the spring, a second projection on the interior surface of the sleeve, first and second abutments on the spigot, and a bayonet connection for coupling the spigot to the platform, wherein the first abutment is movable into engagement with a complementary abutment on the sleeve so as to retain the spring in a stressed state and the spring operates to retains said bayonet connection in an engaged condition when the first abutment is disengaged from the complementary abutment.

An embodiment of the invention will now be described by, way of example, with reference to the accompanying drawings in which:
Figure 1 is a partially broken away view from the rear of a first embodiment of the invention;
Figure 2 is a plan view from below of the mirror shown in Figure 1 with the base removed;
Figure 3 is a partially broken away view from the rear showing the mirror subassembly of the mirror shown in Figure 1, during a first phase of assembly;
Figure 4 is a sectional view on the line 4 - 4 in Figure 3;
Figures 5 and 6 are views corresponding to Figures 1 and 2 respectively during a second phase of installation;
Figures 7 and 8 are views corresponding to Figures 5 and 6 respectively during a third phase of installation;
Figures 9 and 10 are views corresponding to Figures 7 and 8 respectively during a fourth phase of installation;
Figure 11 is a sectional, corresponding to Figure 4, of a second embodiment of the invention;
Figure 12 is a partially broken away view from the rear showing the embodiment of Figure 11 in a third phase of installation, corresponding to Figures 9 and 10.

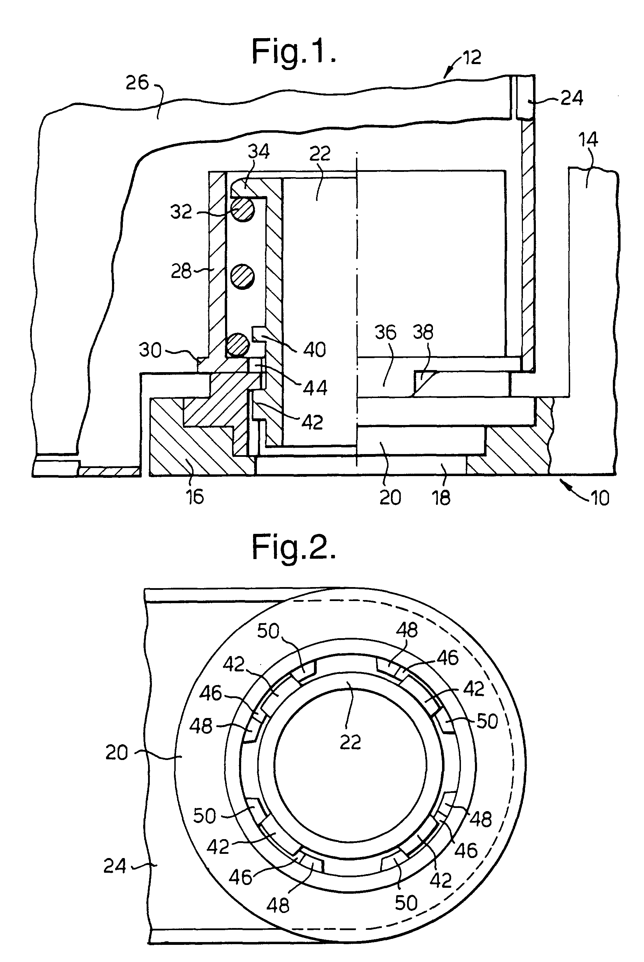

Figures 1 and 2 show an exterior mirror, suitable for mounting on the left-hand side of a motor vehicle, comprising a base 10 and a mirror subassembly 12. The base 10 has a mounting portion 14, adapted to abut against a vehicle body (not shown) and a support platform 16 projecting laterally from the mounting portion 14. The support platform 16 has an aperture 18 with stepped side walls for supporting a bush 20 which is permanently secured to the support platform 16. A spigot 22 projects upwardly from the support platform 16 with its bottom end engaging in the bush 20 in a manner to be explained hereinafter.

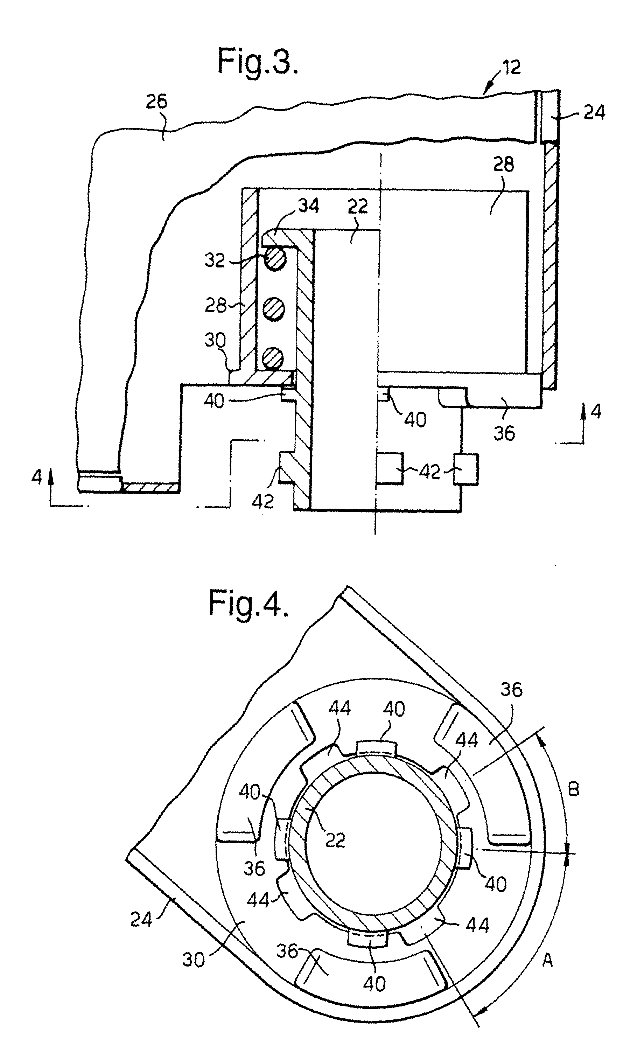

The mirror subassembly 12 comprises a mirror case 24 containing a mirror glass 26. The spigot 22 projects through an opening in the bottom of the case 24 into a sleeve 28 which is secured to the interior of the case 24. The sleeve 28 has a flange 30 which extends both radially inwardly and outwardly across its bottom end. A compression spring 32 engages between the inwardly directed part of the flange 30 and an outwardly extending flange 34 on the upper end of the spigot 22 so as to press the bottom of the flange 30 into abutment with the top of the bush 20. The flange 34 has three detent projections 36 (see Figure 4) on its bottom surface which engages in complementary recesses 38 in the top surface of the bush 20 so as to define a normal orientation of the mirror case 24 relative to the base 10. If, in use, the mirror case 24 is subject to impact, the detent projections 36 are displaced out of their recesses 38, compressing the spring 32.

Turning now to Figures 3 and 4, the spigot 36 has four intermediate outwardly extending abutment projections 40 somewhat lower than half-way up its periphery, and four lower projections 42, each aligned with a respective intermediate projection 40. The inner part of the flange 30 has four cut-outs 44, of larger cross-section than the projections 40 and 42 so that, when the spigot 22 is suitably aligned relative to the sleeve 28, the projections 40 and 42 can pass therethrough.

During a first phase of assembly, when the mirror subassembly 12 is put together, the spring 32 is positioned on the spigot 22. Next the spigot 32 is inserted into the sleeve 28 from its upper end through the opening in the case for the mirror glass 22. Both the intermediate projections 40 and the lower projections 42 pass through the cut-outs 44 in the flange 30, the spring 32 being compressed between the flange 30 on the sleeve 28 and the flange 34 on the spigot. Next the mirror case 24 is turned relative to the spigot 22, as illustrated by the arrow A in Figure 4, so as to move the intermediate projections 40 out of alignment with the cut-outs 44. Engagement of the intermediate projections 40 with the bottom of the flange 30 hold the spring 32 in a compressed state during the next phase of assembly. The mirror glass 26 may be fitted into the mirror case 24 either now or during any subsequent phase of assembly.

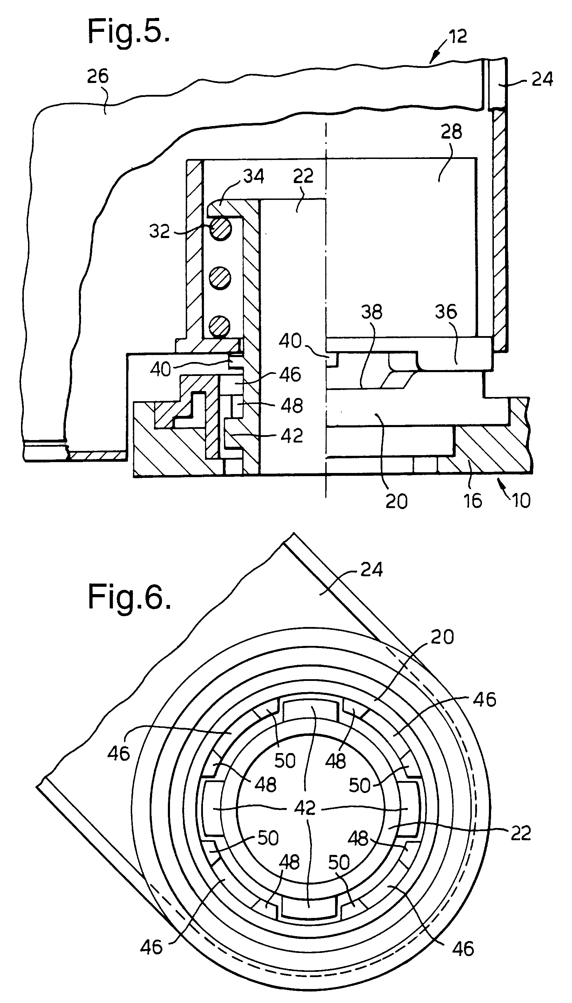

Turning to Figures 5 and 6, the upper end of the inner periphery of the bush 20 has four inwardly directed shoulders 46, each of which has downwardly extending ribs 48 and 50 at its ends, the ribs 48 extending below the ribs 50. During a second phase of assembly, the bush 20 is first secured in the aperture 18 in the platform 16. The next step is to insert the bottom of the spigot 22 into the bush 20, so that each of the lower projections 42 on the spigot 22 passes between adjacent shoulders 46 on the bush 20, until the detent projections 36 on the flange 30 rest on the top surface of the bush 20 between adjacent recesses 38. The top surfaces of the lower projections 42 are now below the bottoms of the ribs 50 but above the bottoms of the ribs 48.

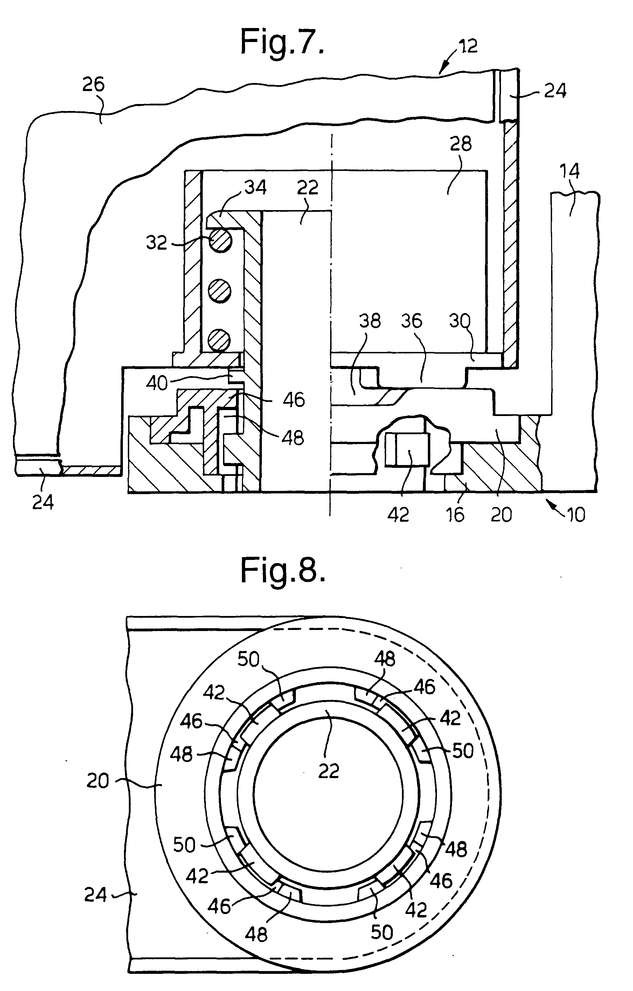

During a third phase of assembly, the mirror subassembly 12 is turned through 45° relative to the base 10 into the orientation shown in Figures 7 and 8. The bottom projections 42 pass below the ribs 50 to positions below respective shoulders 46, further angular movement being limited by the ribs 48. The detent projections 36 on the bottom of the flange 30 now partly overlap respective recesses 38 in the top surface of the bush 20.

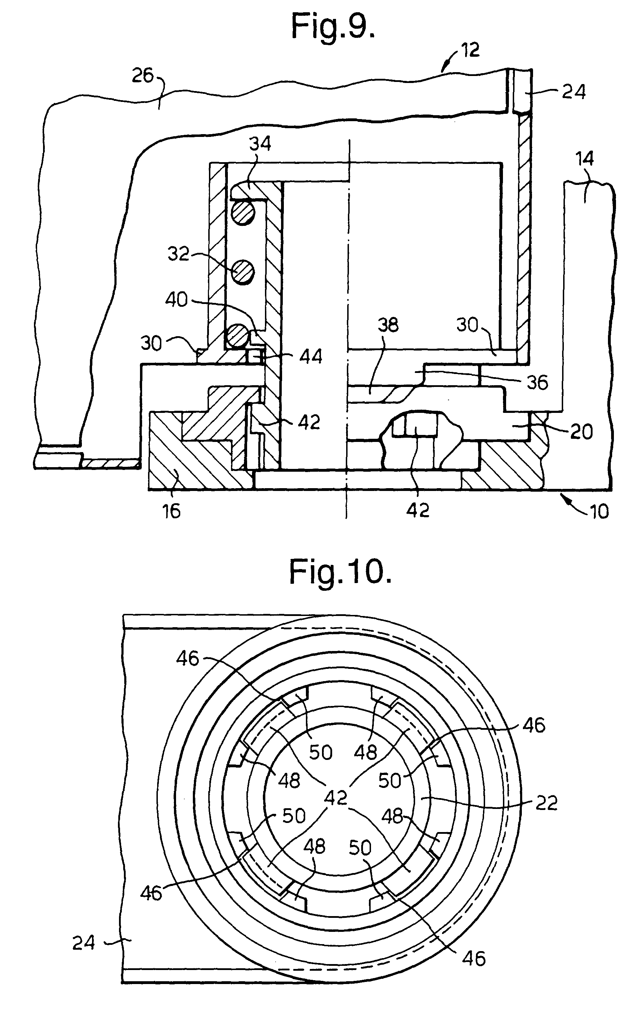

Since any further angular movement of the spigot 22 relative to the bush 20 is prevented by abutment of the lower projections 42 with the ribs 48, continued angular movement of the mirror case 24 causes angular movement of the sleeve 28 relative to the spigot 22, as illustrated by the arrow B in Figure 4, so as to bring the intermediate projections 40 on the spigot 22 into alignment with respective cut-out 44 in the flange 30, allowing the spring 32 to move the spigot 22 upwardly relative to the bush 20. This brings the lower projections 42 into abutment with respective shoulders 46 between adjacent ribs 48 and 50 which block subsequent angular movement of the spigot 22 relative to the bush 20 in either direction, as illustrated in Figure 9.

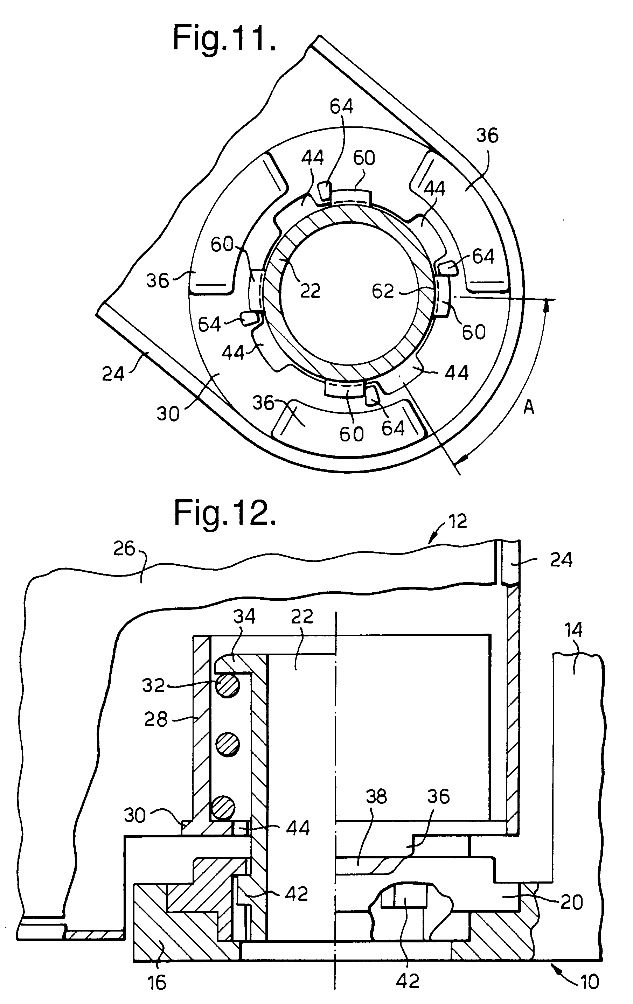

Figures 9 and 10 show the mirror in a position which it might adopt after impact thereon from the front. Further angular movement of the mirror case 24 relative to the base 10 allows the detent projection 36 to enter into the recess 38, as illustrated in Figure 1, where it is retained by the spring 32.

Figures 11 and 12 illustrate a modified embodiment of the invention in which the intermediate projections 40 on the spigot 22 are replaced by intermediate projections 60 which are connected to the spigot 40 by frangible links 62. Abutment stops 64 on the bottom of the flange 30 prevent angular movement of the spigot 22 relative to the sleeve 28 beyond the range indicated by the arrow A. When such further movement is attempted during the third phase of assembly, the projections 60 break off, allowing the spring 32 to cause upward movement of the spigot 22 relative to the bush 20, in a similar manner to that described above with reference to Figure 7.

## Claims

1. A method of assembling an exterior mirror for a motor vehicle, the mirror comprising a base (10) having a mounting portion (14) adapted to abut against a vehicle body and a support platform (16) projecting laterally from the mounting portion (14), a spigot (22) upstanding on the support platform (16), a mirror subassembly (12) pivotally mounted on the spigot (22) for angular movement about the axis thereof, a first detent formation (38) secured to the base (10), a second detent formation (36) secured to the mirror subassembly (12) to engage with the first detent formation (38) to resist angular movement about said axis, and a spring (32) acting parallel to said axis to bias said first and second detent formations (36, 38) into engagement with each other, **characterised by** the steps of:
assembling the spigot (22) and the spring (32) into a sleeve (28) so that the spring (32) engages between a first projection (34) on the exterior of the spigot (22) and a second projection (30) on the interior of the sleeve (28),
engaging a first abutment (40) on the spigot (22) with a complementary abutment (30) on the sleeve (28) so as to retain the spring (32) in a stressed state,
engaging a bayonet connection (42, 46) between the spigot (22) and the platform (16), and
disengaging the first abutment (40) on the spigot (22) from the complementary abutment (30) on the sleeve (28) so that the spring (32) retains said bayonet connection (42, 46) in an engaged condition.

2. A method according to claim 1, wherein the complementary abutment on the sleeve (28) comprises an inwardly facing flange (30) containing a cut-out (44), the first projection (34) being dimensioned to pass through the cut-out (44) when the sleeve (28) is at a first orientation relative to the spigot (22), the step of engaging a first abutment (40) on the spigot (22) with a complementary abutment (30) on the sleeve (28) comprising turning the sleeve (28) to a second orientation relative to the spigot (22) in which the first projection (34) is out of alignment with the cut-out (44).

3. A method according to claim 1 or 2, wherein the step of engaging a bayonet connection (42, 46) between the spigot (22) and the platform (16) comprises angular movement between the spigot (22) and the platform (16) from an orientation in which a second abutment (42) on the spigot (22) is clear of a shoulder (46) on the periphery of an opening in the platform (16) for receiving the spigot (22), to an orientation in which the second abutment (42) is aligned with the shoulder (46) and abuts against a rib (48) thereon the shoulder (46) so that further angular movement of the spigot (22) relative to the platform (16) is resisted.

4. A method according to claim 3, wherein the step of disengaging the first abutment (40) on the spigot (22) from the complementary abutment (30) on the sleeve (28) comprises continued relative angular movement of the sleeve (28) relative to the platform (16) while angular movement of the spigot (22) relative to the platform (16) is resisted by the rib (48).

5. A method according to claim 3, wherein the first abutment (40) is initially connected to the spigot (22) by a frangible link, the step of disengaging said first abutment (40) from the complementary abutment (30) being effected by breaking said link.

6. An exterior mirror for a motor vehicle comprising a base (10) having a mounting portion (14) adapted to abut against a vehicle body and a support platform (16) projecting laterally from the mounting portion (14), a spigot (22) upstanding on the support platform (16), a mirror subassembly (12) pivotally mounted on the spigot (22) for angular movement about the axis thereof, a first detent formation (38) secured to the base (10), a second detent formation (36) secured to the mirror subassembly (12) to engage with the first detent formation (38) to resist angular movement about said axis, and a spring (32) acting parallel to said axis to bias said first and second detent formations (36, 38) into engagement with each other, **characterised by** a first projection (34) on the exterior of the spigot (22) engaging with the spring (32), a second projection (30) on the interior surface of the sleeve (28), first and second abutments on the spigot (22), and a bayonet connection (42, 46) for coupling the spigot (22) to the platform (16), wherein the first abutment (40) is movable into engagement with a complementary abutment (30) on the sleeve (28) so as to retain the spring (32) in a stressed state and the spring (32) operates to retains said bayonet connection (42, 46) in an engaged condition when the first abutment (40) is disengaged from the complementary abutment (30).

7. An exterior mirror according to claim 6, wherein the complementary abutment on the sleeve (28) comprises an inwardly facing flange (30) containing a cut-out (44), the first abutment (40) being dimensioned to pass through the cut-out (44) when the sleeve (28) is at a first orientation relative to the spigot (22).

8. An exterior mirror according to claim 6 or 7, wherein the bayonet connection (42, 46) between the spigot (22) and the platform (16) comprises a second abutment (42) on the spigot (22) aligned with and axially spaced from the first abutment (40), together with a shoulder (46) on the periphery of an opening in the platform (16) for receiving the spigot (22).

9. An exterior mirror according to claim 8, wherein the shoulder (46) has a rib (48) for resisting angular movement of the spigot (22) relative to the platform (16) beyond an orientation in which the second abutment (42) is aligned with the shoulder (46).

## Patentansprüche

1. Verfahren zum Zusammenbau eines Außenspiegels für ein Kraftfahrzeug, welcher Spiegel enthält: ein Basisteil (10) mit einem Montagebereich (14) zur Anlage an einer Fahrzeugkarosserie und eine seitlich von dem Montagebereich (14) vorstehende Tragplattform (16), einen an der Tragplattform (16) nach oben stehenden Zapfen (22), eine Spiegelunterbaugruppe (12), die an dem Zapfen (22) schwenkbar für eine Winkelbewegung um dessen Achse angebracht ist, eine an dem Basisteil (10) befestigte erste Rastformation (38), eine an der Spiegelunterbaugruppe (12) befestigte zweite Rastformation (36) zum Eingriff mit der ersten Rastformation (38), um einer Winkelbewegung um die Achse zu widerstehen, und eine parallel zu der Achse wirkende Feder (32), um die erste und zweite Rastformation (36, 38) in Eingriff miteinander vorzuspannen, **gekennzeichnet durch** folgende Schritte:
Zusammenbauen des Zapfens (22) und der Feder (32) in eine Hülse (28) derart, daß die Feder (32) zwischen einem ersten Vorsprung (34) am Äußeren des Zapfens (22) und einem zweiten Vorsprung (30) am Inneren der Hülse (28) angreift,
Eingreifen eines ersten Anschlags (40) an dem Zapfen (22) mit einem komplementären Anschlag (30) an der Hülse (28), um die Feder (32) in einem gespannten Zustand zu halten,
Eingreifen einer Bajonettverbindung (42, 46) zwischen dem Zapfen (22) und der Plattform (16), und
Freigeben des ersten Anschlags (40) an dem Zapfen (22) von dem komplementären Anschlag (30) an der Hülse (28), so daß die Feder (32) die Bajonettverbindung (42, 46) in einem eingreifenden Zustand hält.

2. Verfahren nach Anspruch 1, wobei der komplementäre Anschlag an der Hülse (28) einen einwärts zeigenden Flansch (30) mit einem Ausschnitt (44) enthält, der erste Vorsprung (34) derart dimensioniert ist, daß er durch den Ausschnitt (44) hindurchtritt, wenn die Hülse (28) sich in einer ersten Orientierung relativ zu dem Zapfen (22) befindet, der Schritt des Eingreifens eines ersten Anschlags (40) an dem Zapfen (22) mit einem komplementären Anschlag (30) an der Hülse (28) ein Drehen der Hülse (28) in eine zweite Orientierung relativ zu dem Zapfen (22) enthält, in der der erste Vorsprung (34) sich außerhalb der Ausrichtung mit dem Ausschnitt (44) befindet.

3. Verfahren nach Anspruch 1 oder 2, wobei der Schritt des Eingriffs einer Bajonettverbindung (42, 46) zwischen dem Zapfen (22) und der Plattform (16) eine Winkelbewegung zwischen dem Zapfen (22) und der Plattform (16) aus einer Orientierung enthält, in der ein zweiter Anschlag (42) an den Zapfen (22) von einer Schulter (46) am Umfang einer Öffnung in der Plattform (16) zur Aufnahme des Zapfens (22) frei ist, in einer Orientierung, in der der zweite Anschlag (42) mit der Schulter (46) ausgerichtet ist und an einer Rippe (48) daran anliegt, so daß eine weitere Winkelbewegung des Zapfens (22) relativ zu der Plattform (16) verhindert wird.

4. Verfahren nach Anspruch 3, wobei der Schritt des Freikommens des ersten Anschlags (40) an dem Zapfen (22) von dem komplementären Anschlag (30) an der Hülse (28) eine kontinuierliche relative Winkelbewegung der Hülse (28) relativ zu der Plattform (16) enthält, während einer Winkelbewegung des Zapfens (22) relativ zu der Plattform (16) von der Rippe (48) widerstanden wird.

5. Verfahren nach Anspruch 3, wobei der erste Anschlag (40) anfänglich mit dem Zapfen (22) über eine brechbare Verbindung verbunden ist, der Schritt des Freikommens des ersten Anschlags (40) von dem komplementären Anschlag (30) durch Brechen der Verbindung erfolgt.

6. Außenspiegel für ein Kraftfahrzeug, enthaltend ein Basisteil (10) mit einem Montagebereich (14) zur Anlage an einer Fahrzeugkarosserie und einer seitlich von dem Montagebereich (14) vorstehenden Tragplattform (16), einen an der Tragplattform (16) aufrecht stehenden Zapfen (22), eine an dem Zapfen (22) für eine Winkelbewegung um dessen Achse schwenkbar angebrachte Spiegelunterbaugruppe (12), eine an dem Basisteil (10) befestigte erste Rastformation (38), eine an der Spiegelunterbaugruppe (12) befestigte zweite Rastformation (36) zum Eingriff mit der ersten Rastformation (38), um einer Winkelbewegung um die Achse zu widerstehen, und eine parallel zu der Achse wirkende Feder (32), um die erste und zweite Rastformation (36, 38) in Eingriff miteinander vorzuspannen, **gekennzeichnet durch** einen ersten Vorsprung (34) am Äußeren des Zapfens (22), der mit der Feder (32) in Eingriff ist, einem zweiten Vorsprung (30) an der Innenseite der Hülse (28), erste und zweite Anschläge an dem Zapfen (22), und eine Bajonettverbindung (42, 46) zum Kuppeln des Zapfens (22) mit der Plattform (16), wobei der erste Anschlag (40) in Eingriff mit einem komplementären Anschlag (30) an der Hülse (28) bewegbar ist, um die Feder (32) in einem gespannten Zustand zu halten, und die Feder (32) die Bajonettverbindung (42, 46) in einem Eingriffszustand hält, wenn der erste Anschlag (40) von dem komplementären Anschlag (30) freikommt.

7. Außenspiegel nach Anspruch 6, wobei der komplementäre Anschlag an der Hülse (28) einen einwärts zeigenden Flansch (30) mit einem Ausschnitt (44) enthält, der erste Anschlag (40) so bemessen ist, daß er sich durch den Ausschnitt (44) hindurch bewegt, wenn die Hülse (28) sich in einer ersten Orientierung relativ zum Zapfen (22) befindet.

8. Außenspiegel nach Anspruch 6 oder 7, wobei die Bajonettverbindung (42, 46) zwischen dem Zapfen (22) und der Plattform (16) einen zweiten Anschlag (42) an dem Zapfen (22), der mit dem ersten Anschlag (40) ausgerichtet und axial von ihm entfernt ist, zusammen mit einer Schulter (46) am Umfang einer Öffnung in der Plattform (16) zur Aufnahme des Zapfens (22) enthält.

9. Außenspiegel nach Anspruch 8, wobei die Schulter (46) eine Rippe (48) zum Widerstehen einer Winkelbewegung des Zapfens (22) relativ zu der Plattform (16) über eine Orientierung hinaus, in der der zweite Anschlag (42) mit der Schulter (46) ausgerichtet ist, aufweist.

## Revendications

1. Procédé d'assemblage d'un rétroviseur extérieur pour un véhicule à moteur, le rétroviseur comprenant une base (10) comportant une partie de montage (14) apte à venir s'abouter à une carrosserie de véhicule et une plate-forme de support (16) faisant saillie latéralement sur la partie de montage (14), un tourillon (22) dressé sur la plate-forme de support (16), un sous-ensemble (12) de rétroviseur monté à pivotement sur le tourillon (22) pour un mouvement angulaire autour de celui-ci, une première formation d'arrêt (38) fixée à la base (10), une deuxième formation d'arrêt (36) fixée au sous-ensemble (12) de rétroviseur pour venir en prise avec la première formation d'arrêt (38) pour résister à un mouvement angulaire autour dudit axe, et un ressort (32) agissant en parallèle audit axe pour précharger lesdites première et deuxième formations d'arrêt (36, 38) en prise l'une avec l'autre, **caractérisé par** les étapes consistant à :
assembler le tourillon (22) et le ressort (32) dans un manchon (28) de manière que le ressort (32) vienne en prise entre une première saillie (34) sur l'extérieur du tourillon (22) et une deuxième saillie (30) sur l'intérieur du manchon (28),
mettre en prise une première butée (40) sur le tourillon (22) avec une butée complémentaire (30) sur le manchon (28) de manière à maintenir le ressort (32) dans un état chargé,
mettre en prise une connexion à baïonnette (42, 46) entre le tourillon (22) et la plate-forme 16, et
dégager la première butée (40) sur le tourillon (22) de la butée complémentaire (30) sur le manchon (28) de manière que le ressort (32) maintienne la connexion (42, 46) dans un état de prise.

2. Procédé selon la revendication 1, dans lequel la butée complémentaire (30) sur le manchon (28) comprend une bride faisant face vers l'intérieur contenant une découpure (44), la première saillie (34) étant dimensionnée pour passer par la découpure (44) lorsque le manchon (28) est dans une première orientation par rapport au tourillon (22), l'étape consistant à mettre en prise une première butée (40) sur le tourillon (22) avec une butée complémentaire (30) sur le manchon (28) comprenant la rotation du manchon (28) jusqu'à une deuxième orientation par rapport au tourillon (22) dans laquelle la première saillie (34) est hors d'alignement avec la découpure (44).

3. Procédé selon la revendication 1 ou 2, dans lequel l'étape consistant à mettre en prise une connexion à baïonnette (42, 46) entre le tourillon (22) et la plate-forme (16) comprend un mouvement angulaire entre le tourillon (22) et la plate-forme (16) à partir d' une orientation dans laquelle une deuxième butée (42) sur le tourillon (22) est dégagée d'un épaulement (46) sur la périphérie d'une ouverture dans la plate-forme (16) pour recevoir le tourillon (22), jusqu'à une orientation dans laquelle la deuxième butée (42) est alignée avec l'épaulement (46) et bute contre une nervure (48) placée sur l'épaulement (46) de sorte que la poursuite du mouvement du tourillon (22) par rapport à la plate-forme (16) se heurte à une résistance.

4. Procédé selon la revendication 3, dans lequel l'étape consistant à dégager la première butée (40) sur le tourillon (22) de la butée complémentaire (30) sur le manchon (28) comprend la poursuite du mouvement angulaire du manchon (28) par rapport à la plate-forme (16), alors que le mouvement angulaire du tourillon (22) par rapport à la plate-forme (16) se heurte à une résistance de la part de la nervure (48).

5. Procédé selon la revendication 3, dans lequel la première butée (40) est connectée initialement au tourillon (22) par une biellette fragile, l'étape consistant à dégager ladite première butée (40) de la butée complémentaire (30) étant effectuée en brisant ladite biellette.

6. Rétroviseur extérieur pour un véhicule à moteur comprenant une base (10) comportant une partie de montage (14) apte à s'abouter à une carrosserie de véhicule et une plate-forme de support (16) faisant saillie latéralement sur la partie de montage (14), un tourillon (22) se dressant sur la plate-forme de support (16), un sous-ensemble (12) de rétroviseur monté à pivotement sur le tourillon (22) pour un mouvement angulaire autour de son axe, une première formation d'arrêt (38) fixée à la base (10), une deuxième formation d'arrêt (36) fixée au sous-ensemble (12) de rétroviseur pour venir en prise avec la première formation d'arrêt (38) pour résister à un mouvement angulaire autour dudit axe, et un ressort (32) agissant en parallèle audit axe pour précharger lesdites première et deuxième formations d'arrêt (36, 38) en prise l'une avec l'autre, **caractérisé par** une première saillie (34) sur l'extérieur du tourillon (22) en prise avec le ressort (32), une deuxième saillie (30) sur la surface intérieure du manchon (28), une première et une deuxième butées sur le tourillon (22), et une connexion à baïonnette (42, 46) pour accoupler le tourillon (22) à la plate-forme (16), la première butée (40) pouvant se déplacer pour venir en prise avec une butée complémentaire (30) sur le manchon (28) de manière à maintenir le ressort (32) dans un état chargé et le ressort (32) agissant pour maintenir la connexion à baïonnette (42, 46) dans un état de prise lorsque la première butée (40) est dégagée de la butée complémentaire (30).

7. Rétroviseur extérieur selon la revendication 6, dans lequel la butée complémentaire sur le manchon (28) comprend une bride (30) faisant face vers l'intérieur contenant une découpure (44), la première butée étant dimensionnée pour passer par la découpure (44) lorsque le manchon (28) est à une première orientation par rapport au tourillon (22).

8. Rétroviseur extérieur selon la revendication 6 ou 7, dans lequel la connexion à baïonnette (42, 46) entre le tourillon (22) et la plate-forme (16) comprend une deuxième butée (42) sur le tourillon, (22) alignée avec la première butée (40) et espacée axialement de celle-ci, ainsi qu'un épaulement (46) sur la périphérie d'une ouverture dans la plate-forme (16) pour recevoir le tourillon (22).

9. Rétroviseur extérieur selon la revendication 8, dans lequel l'épaulement (46) comporte une nervure (48) pour résister à un mouvement angulaire du tourillon (22) par rapport à la plate-forme (16) au-delà d'une orientation dans laquelle la deuxième butée est alignée avec l'épaulement (46).
